# EUROPÄISCHE PATENTANMELDUNG

(11) **EP 2 774 795 A2**
(43) Veröffentlichungstag der Anmeldung: **10.09.2014**
(21) Anmeldenummer: 14157182.8
(22) Anmeldetag: 28.02.2014
(51) Int. Cl.: B60J 10/00, E05F 15/00

(54) **Elastisches Hohlprofil und Innenschwenktüre mit einem elastischen Hohlprofil**

(30) Priorität: 08.03.2013 DE 102013204020; 22.03.2013 DE 102013205149
(71) Anmelder: Mayser GmbH & Co. KG, 89073 Ulm (DE)
(72) Erfinder: Iwan Scherer, 89584 Ehingen (DE); Manuel Kelsch, 89075 Ulm (DE); Manfred Buttner, 89165 Dietenheim-Regglisweiler (DE); Marc Scherraus, 89275 Elchingen (DE)
(74) Vertreter: Patentanwälte Ruff, Wilhelm, Beier, Dauster & Partner

(57) **Zusammenfassung**

Die Erfindung betrifft ein elastisches Hohlprofil, insbesondere für eine stirnseitige Anordnung an einem Türblatt einer Innenschwenktüre, wobei das Hohlprofil einen Halteabschnitt zur Befestigung insbesondere an der Stirnseite des Türblatts aufweist, wobei das Hohlprofil wenigstens eine in Längsrichtung durchgehende Hohlkammer zur Anordnung eines elektrischen Schaltprofils aufweist, wobei das Hohlprofil wenigstens einen Kontaktbereich an einer Außenfläche des Hohlprofils aufweist und wobei der Kontaktbereich eine gedachte Verlängerung der seitlichen Begrenzung des Halteabschnitts überragt.

## Beschreibung

Die Erfindung betrifft ein elastisches Hohlprofil, insbesondere für eine stirnseitige Anordnung an einem Türblatt einer Innenschwenktüre, wobei das Hohlprofil einen Halteabschnitt zur Befestigung insbesondere an der Stirnseite des Türblatts aufweist, wobei das Hohlprofil wenigstens eine in Längsrichtung durchgehende Hohlkammer zur Anordnung eines elektrischen Schaltprofils oder zum Erzeugen eines detektierbaren Druckstoßes beim Komprimieren aufweist, wobei das Hohlprofil wenigstens einen Kontaktbereich an einer Außenfläche des Hohlprofils aufweist. Die Erfindung betrifft auch eine Innenschwenktüre mit einem erfindungsgemäßen elastischen Hohlprofil.

Innenschwenktüren werden insbesondere an Bussen des öffentlichen Personennahverkehrs eingesetzt. Solche Innenschwenktüren werden um einen Drehpunkt verschwenkt und befinden sich in einer geöffneten Stellung seitlich des Einstiegs innerhalb eines Fahrzeugs. Solche Innenschwenktüren werden deshalb eingesetzt, damit die geöffneten Türen nicht wesentlich über die Kontur des Fahrzeugs hinausstehen.

Aus der Europäischen Patentschrift EP 1561623 B1 sind elastische Hohlprofile bekannt, die für Innenschwenktüren vorgesehen sein können. Problematisch ist bei den dort gezeigten Hohlprofilen, dass im Wesentlichen lediglich stirnseitige Kollisionen mit dem Hohlprofil zuverlässig erfasst werden können.

Aus der deutschen Offenlegungsschrift DE 10 2007 002 745 A1 ist ein elastisches Hohlprofil mit scharnierartig angelenkter Dichtlippe und luftdicht abgeschlossener Hohlkammer zum Erzeugen eines detektierbaren Druckstoßes beim Komprimieren bekannt.

Gerade bei Innenschwenktüren ist jedoch die zuverlässige Erfassung einer nicht stirnseitigen sondern seitlichen Kollision des Hohlprofils mit einer im Schwenkbereich stehenden Person von großer Bedeutung. Dies insbesondere deshalb, da Innenschwenktüren auf ihrer Innenseite mit einem Handgriff ausgerüstet sind. Wenn die Innenschwenktüre schließt, solange ein Fahrgast noch einsteigt und dazu an dem Handgriff der Innenschwenktüre angreift, erfolgt eine Kollision mit dem Hohlprofil nicht stirnseitig sondern ausschließlich in seitlicher Richtung. Das Detektieren einer Kollision kann mittels eines in einer Hohlkammer angeordneten elektrischen Schaltprofils und/oder auch dadurch erfolgen, dass die Hohlkammer bei der Kollision komprimiert wird, wodurch ein Druckstoß innerhalb der Hohlkammer erzeugt wird, der mittels eines geeigneten Sensors detektiert wird.

Mit der Erfindung soll ein elastisches Hohlprofil und eine Innenschwenktüre verbessert werden.

Erfindungsgemäß ist hierzu ein elastisches Hohlprofil, insbesondere für eine stirnseitige Anordnung an einem Türblatt einer Innenschwenktüre, vorgesehen, wobei das Hohlprofil einen Halteabschnitt zur Befestigung insbesondere an der Stirnseite des Türblatts aufweist, wobei das Hohlprofil wenigstens eine in Längsrichtung durchgehende Hohlkammer zur Anordnung eines elektrischen Schaltprofils oder zum Erzeugen eines detektierbaren Druckstoßes aufweist, wobei das Hohlprofil wenigstens einen Kontaktbereich an einer Außenfläche des Hohlprofils aufweist und wobei der Kontaktbereich eine gedachte Verlängerung der seitlichen Begrenzung des Halteabschnitts überragt.

Der Kontaktbereich bildet dadurch eine beim Schließen dem Türblatt voreilende Auswölbung oder einen voreilenden Vorsprung des Hohlprofils. Mit diesem voreilenden Vorsprung wird ein Hindernis beim Schließen der Türe in Kontakt kommen, insbesondere ein Unterarm eines Fahrgasts, der sich an dem Handgriff der Innenschwenktüre festhält. Durch den Kontaktbereich, der die gedachte Verlängerung der seitlichen Begrenzung des Halteabschnitts überragt, ist erstmals zuverlässig eine sogenannte Unterarmerkennung bei Innenschwenktüren möglich. Durch die voreilende Auswölbung oder den voreilenden Vorsprung am Hohlprofil kann sichergestellt werden, dass zunächst der Kontaktbereich auf das Hindernis, insbesondere den Unterarm, trifft und dadurch unmittelbar nach dem Auftreten des Kontaktbereichs bereits ein Schaltsignal ausgelöst werden kann, das dann verursacht, dass der Türantrieb gestoppt oder reversiert wird.

In Weiterbildung der Erfindung überragt der Kontaktbereich die gedachte Verlängerung der seitlichen Begrenzung des Halteabschnitts um einen Abstand, der mindestens einem Verformungsweg des Hohlprofils bei Krafteinwirkung auf den Kontaktbereich bis zum Auslösen der elektrischen Schaltleiste oder bis zum Erzeugen eines detektierbaren Druckstoßes entspricht.

Auf diese Weise kann sichergestellt werden, dass mittels des elektrischen Schaltprofils oder mittels eines Drucksensors ein Schaltsignal erzeugt wird, bevor das Türblatt mit einem Unterarm eines Fahrgasts kollidiert. Auf diese Weise können Verletzungen zuverlässig vermieden werden.

In Weiterbildung der Erfindung ist der Kontaktbereich mittels einer in Längsrichtung durchgehenden Auswölbung der Außenfläche des Hohlprofils gebildet.

Auf diese Weise wird sichergestellt, dass der Kontaktbereich die gedachte Verlängerung der seitlichen Begrenzung des Halteabschnitts über die gesamte Höhe des Türblatts und somit des Hohlprofils überragt. Eine sichere Detektierung von Hindernissen ist dadurch sichergestellt.

In Weiterbildung der Erfindung weist das Hohlprofil wenigstens einen ersten Betätigungssteg auf, der sich von der Hohlkammer bis zu dem Kontaktbereich erstreckt.

In Weiterbildung der Erfindung ist die Hohlkammer mit einem zweiten Betätigungssteg verbunden, der insbesondere fluchtend zum ersten Betätigungssteg angeordnet ist.

Die Hohlkammer ist dadurch innerhalb des Hohlprofils so angeordnet, dass sie einen im Querschnitt insbesondere geradlinig verlaufenden Betätigungssteg unterbricht, der in einem ersten Abschnitt durch den ersten Betätigungssteg und in einem zweiten Abschnitt durch den zum ersten Betätigungssteg fluchtenden zweiten Betätigungssteg gebildet ist. Eine Kraftübertragung vom Kontaktbereich über den ersten Betätigungssteg, die Hohlkammer und den zweiten Betätigungssteg erfolgt dadurch insbesondere geradlinig und dadurch zuverlässig und mit sehr kurzer Reaktionszeit.

In Weiterbildung der Erfindung erstreckt sich der zweite Betätigungssteg ausgehend von der Hohlkammer bis zu dem Halteabschnitt des Hohlprofils.

Auf diese Weise kann eine Reaktionskraft, die zum Komprimieren der Hohlkammer und dem gegebenenfalls darin angeordneten elektrischen Schaltprofil erforderlich ist, zuverlässig bereitgestellt werden.

In Weiterbildung der Erfindung greift ein dritter Betätigungssteg im Bereich der Verbindung des zweiten Betätigungsstegs mit der Hohlkammer an dem zweiten Betätigungssteg oder der Hohlkammer an und der dritte Betätigungssteg erstreckt sich in einem Winkel zum zweiten Betätigungssteg.

Auf diese Weise kann die Hohlkammer mittels des zweiten und des dritten Betätigungsstegs zuverlässig abgestützt werden, wenn vom Kontaktbereich über den ersten Betätigungssteg eine zu detektierende Kollisionskraft auf die Hohlkammer einwirkt. Durch die Abstützung mittels des zweiten Betätigungsstegs und des dritten Betätigungsstegs kann die Hohlkammer beim Auftreten einer solchen Kollisionskraft nicht ausweichen sondern wird zuverlässig komprimiert und ein Schaltsignal wird zuverlässig erzeugt.

In Weiterbildung der Erfindung erstreckt sich der dritte Betätigungssteg bis zu einer, dem Kontaktbereich gegenüberliegenden Außenfläche des Hohlprofils.

In Weiterbildung der Erfindung ist das Hohlprofil an seinem, dem Halteabschnitt gegenüberliegenden Ende mit einer Dichtlippe versehen, wobei im Bereich einer Verbindung der Dichtlippe mit dem Hauptabschnitt des Hohlprofils eine zweite Hohlkammer zur Anordnung eines zweiten elektrischen Schaltleistenprofils oder zum Erzeugen eines detektierbaren Druckstoßes vorgesehen ist.

Durch Vorsehen der Dichtlippe und der zweiten Hohlkammer kann zuverlässig auch eine Kollision des Hohlprofils im Bereich seiner Stirnseite, in der die Dichtlippe angeordnet ist, mit einem Hindernis detektiert werden. Auf diese Weise können mit dem erfindungsgemäßen Hohlprofil auch Hindernisse erkannt werden, die beim Schließen der Innenschwenktüre mit der Stirnseite berührt und insbesondere zwischen den Innenschwenktüren eingeklemmt werden.

Das der Erfindung zugrunde liegende Problem wird auch durch eine Innenschwenktüre mit einem erfindungsgemäßen elastischen Hohlprofil gelöst, wobei der Kontaktbereich eine gedachte Verlängerung einer Innenseite des Türblatts der Innenschwenktüre nach innen überragt.

Durch eine solche Anordnung des Kontaktbereichs bzw. eine solche Bemessung des Hohlprofils kann zuverlässig sichergestellt werden, dass der Unterarm eines Fahrgasts, der sich beim Schließen der Innenschwenktüre an deren Handgriff festhält, als Hindernis detektiert wird, bevor das Türblatt selbst mit dem Unterarm kollidiert und dadurch möglicherweise Verletzungen verursacht. Mit der erfindungsgemäßen Innenschwenktüre kann dadurch ein sehr sicherer Betrieb realisiert werden.

In Weiterbildung der Erfindung ist eine innenliegende Außenfläche des Hohlprofils auf Höhe des Halteabschnitts etwa in Verlängerung der Innenseite des Türblatts angeordnet, wobei sich die innenliegende Außenfläche ausgehend vom Halteabschnitt schräg von der Innenseite des Türblatts in Richtung von der gedachten Verlängerung des Türblatts weg bis zum Kontaktbereich erstreckt und wobei sich die Außenfläche anschließend an den Kontaktbereich wieder in Richtung der gedachten Verlängerung erstreckt und diese schneidet.

Der Kontaktbereich ist durch diese Maßnahmen demnach an einer nach innen vorragenden Ecke des Hohlprofils angeordnet. Beim Schließen der Innenschwenktüre bildet der Kontaktbereich somit einen voreilenden Vorsprung oder eine voreilende Auswölbung des Hohlprofils, die dann als Erstes mit einem Hindernis, insbesondere dem Unterarm eines Passagiers kollidiert und dadurch ein Schaltsignal zum Stoppen oder Reversieren des Türantriebs auslösen kann. Die Ecke des Hohlprofils, an der der Kontaktbereich angeordnet ist, wird vorzugsweise durch aufeinandertreffende Außenflächen des Hohlprofils gebildet, die im Querschnitt einen Winkel von weniger als 90° einschließen, insbesondere etwa 50 bis 80°. Die innenliegenden Außenflächen des Hohlprofils können dadurch vom Halteabschnitt ausgehend zunächst schräg nach innen, von dem Türblatt weg laufen, und dann nach dem Kontaktabschnitt wieder schräg in Richtung nach außen laufen. Auf diese Weise kann der Kontaktbereich an einer innenliegenden Ecke des Hohlprofils realisiert werden und das Hohlprofil kann eine Form erhalten, wie sie für die Abdichtung von Innenschwenktüren vorteilhaft ist.

Weitere Merkmale und Vorteile der Erfindung ergeben sich aus den Ansprüchen und der nachfolgenden Beschreibung bevorzugter Ausführungsformen der Erfindung im Zusammenhang mit den Zeichnungen. Einzelmerkmale der unterschiedlichen, in den Figuren dargestellten Ausführungsformen lassen sich dabei in beliebiger Weise miteinander kombinieren, ohne den Rahmen der Erfindung zu überschreiten. In den Zeichnungen zeigen:
- Fig. 1: eine Ansicht eines elastischen Hohlprofils gemäß einer ersten Ausführungsform der Erfindung,
- Fig. 2: eine schematische Darstellung zur Verdeutlichung des Bewegungsablaufes einer Innenschwenktüre mit zwei gegenüberliegenden Türblättern, die jeweils stirnseitig mit einem elastischen Hohlprofil gemäß Fig. 1 versehen sind,
- Fig. 3: eine schematische Darstellung eines Fahrgasts, der an einem Handgriff eines Türblatts der Innenschwenktüre der Fig. 2 angreift,
- Fig. 4: die Situation der Fig. 3, nachdem das Türblatt der Innenschwenktüre seine Schließbewegung begonnen hat,
- Fig. 5: eine vergrößerte, abschnittsweise Darstellung der Situation der Fig. 3,
- Fig. 6: ein elastisches Hohlprofil gemäß einer zweiten Ausführungsform der Erfindung,
- Fig. 7: ein elastisches Hohlprofil gemäß einer dritten Ausführungsform der Erfindung,
- Fig. 8: ein elastisches Hohlprofil gemäß einer vierten Ausführungsform der Erfindung,
- Fig. 9: ein elastisches Hohlprofil gemäß einer fünften Ausführungsform der Erfindung, und
- Fig. 10: ein elastisches Hohlprofil gemäß einer sechsten Ausführungsform der Erfindung.

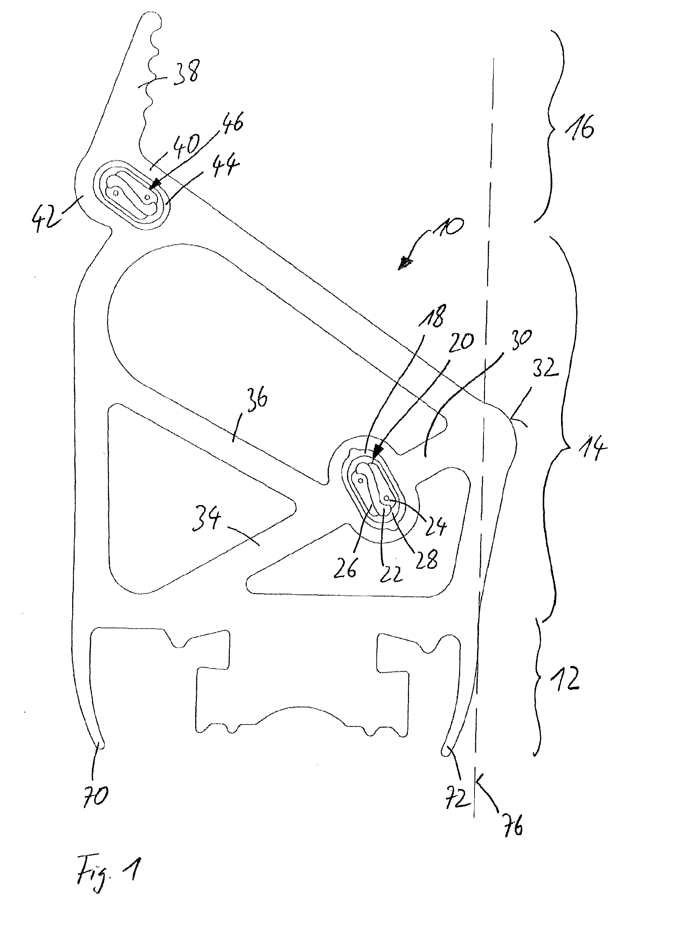

Fig. 1 zeigt in einer Ansicht von oben ein erfindungsgemäßes elastisches Hohlprofil 10, also in Längsrichtung des Hohlprofils 10 gesehen. Das Hohlprofil 10 weist einen Halteabschnitt 12 auf, der für die Befestigung des Hohlprofils 10, beispielsweise an der Stirnseite einer Innenschwenktüre vorgesehen ist. Anschließend an den Halteabschnitt 12 ist ein Hauptabschnitt 14 vorgesehen. Auf den Hauptabschnitt 14 folgt ein Dichtlippenabschnitt 16 mit einer Dichtlippe 38, die an einer, dem Halteabschnitt 12 gegenüberliegenden Ende des Hauptabschnitts 14 angeordnet ist. Das Hohlprofil 10 ist aus elastischem Material gebildet und erfüllt u.a. eine Abdichtfunktion. Um Kollisionen des Hohlprofils 10 mit einem Hindernis zu detektieren, ist das Hohlprofil 10 mit einer ersten Hohlkammer 18 innerhalb des Hauptabschnitts 14 versehen, in der ein elektrisches Schaltprofil 20 angeordnet ist. Das Schaltprofil 20 ist in konventioneller Weise aufgebaut und weist einen Hohlraum 22 auf sowie zwei, an den Hohlraum 22 angrenzende, elektrisch leitfähige Bereiche 24, 26. Eine elektrisch isolierende Umhüllung 28 umgibt den Hohlraum sowie die leitfähigen Bereiche 24, 26. Wird das Schaltprofil 20 komprimiert, kommen die beiden leitfähigen Bereiche 24, 26 miteinander in Kontakt und ein Schaltsignal kann erzeugt werden. Die isolierende, elastische Umhüllung 28 sorgt nach dem Wegfall einer komprimierenden Kraft dafür, dass sich die leitfähigen Bereiche 24, 26 wieder voneinander weg bewegen. Anstelle des Schaftprofils 20 kann die Hohlkammer 18 auch abgedichtet und mit einem Drucksensor, beispielsweise einem Membranschalter, verbunden sein. Eine Komprimierung der Hohlkammer 18 führt dann zur Erzeugung eines Druckstoßes oder einer Druckschwankung in der Hohlkammer 18, die mittels des Drucksensors detektiert wird, der dann wiederum ein Schaltsignal erzeugt.

Die erste Hohlkammer 18 ist innerhalb des Hohlprofils 10 angeordnet und ist mittels eines ersten Betätigungsstegs 30 mit einem Kontaktbereich 32 an der in Fig. 1 rechts liegenden Außenfläche des Hohlprofils 10 verbunden. Der Kontaktbereich 32 ist durch eine in Längsrichtung durchgehende Auswölbung der Außenfläche des Hohlprofils gebildet. Gegenüberliegend dem ersten Betätigungssteg 30 ist die Hohlkammer 18 mit einem zweiten Betätigungssteg 34 verbunden, der fluchtend zum ersten Betätigungssteg 30 angeordnet ist und der bis zum Halteabschnitt 12 verläuft. Wenn der Kontaktbereich 32 mit einem Hindernis kollidiert, so wird der Kontaktbereich 32 in der Figur 1 nach links bewegt. Diese Bewegung des Kontaktbereichs 32 wird mittels des ersten Betätigungsstegs 30 auf die Hohlkammer 18 übertragen. Eine Reaktionskraft wird von dem zweiten Betätigungssteg 34 aufgebracht, der sich am Halteabschnitt 12 abstützt und somit nicht ausweichen kann. In der Folge wird die Hohlkammer 18 zusammen mit dem Schaltprofil 20 zusammengedrückt und ein Schaltsignal wird ausgelöst.

Im Bereich der Verbindung des zweiten Betätigungsstegs 34 mit der Hohlkammer 18 greift ein dritter Betätigungssteg 36 an dem zweiten Betätigungssteg 34 an. Der dritte Betätigungssteg 36 ist in einem Winkel zum zweiten Betätigungssteg 34 angeordnet und führt bis zur Außenfläche des Hohlprofils 10 in einen Bereich, der dem Kontaktbereich 32 etwa gegenüberliegt. Der dritte Betätigungssteg 36 verhindert das Ausknicken des zweiten Betätigungsstegs 34, wenn über den ersten Betätigungssteg 30 eine Kraft zum Komprimieren der Hohlkammer 18 aufgebracht wird.

Die Dichtlippe 38 ist gegenüberliegend dem Halteabschnitt 12 mit dem Hauptabschnitt 14 verbunden. Die Anbindung der Dichtlippe 38 erfolgt über zwei Stege 40, 42, die einerseits mit dem Fußpunkt der Dichtlippe 38 und andererseits mit der Außenfläche des Hauptabschnitts 14 verbunden sind. Zwischen den Stegen 40 ist eine zweite Hohlkammer 44 angeordnet, in der ein zweites elektrisches Schaltprofil 46 angeordnet ist. Wenn die Dichtlippe 38 mit einem Hindernis kollidiert, so werden die Stege 40, 42 verformt und in der Folge dessen wird die Hohlkammer 44 und damit das elektrische Schaltprofil 46 komprimiert. Dadurch kann ebenfalls ein Schaltsignal zum Stoppen oder Reversieren eines Türantriebs ausgelöst werden. Auch die Hohlkammer 44 kann anstelle der Anordnung des Schaftprofils 46 abgedichtet und mit einem Drucksensor verbunden sein, der dann beim Komprimieren der Hohlkammer 44 ein Schaltsignal erzeugt.

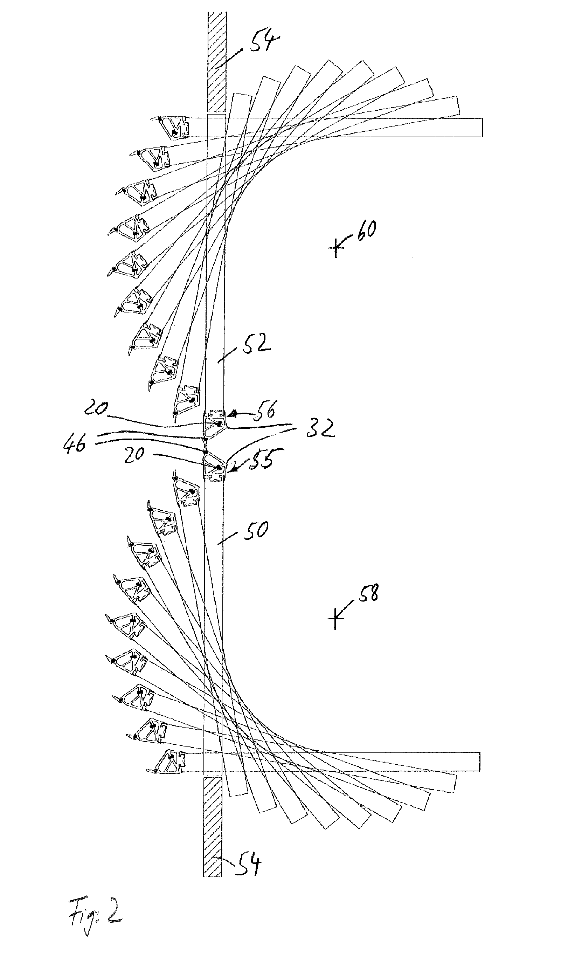

Die Darstellung der Fig. 2 zeigt schematisch den Bewegungsablauf einer Innenschwenktüre mit zwei Türblättern 50, 52, wobei die Positionen der Türblätter zwischen dem vollständig geöffneten Zustand bei 0° und dem vollständig geschlossenen Zustand bei 90° in 10° Schritten dargestellt sind. Im geschlossenen Zustand sind die beiden Türblätter 50, 52 fluchtend zur Außenwand 54 eines Fahrzeugs angeordnet, beispielsweise eines Busses des öffentlichen Personennahverkehrs. Sowohl das Türblatt 50 als auch das Türblatt 52 ist stirnseitig mit einem erfindungsgemäßen Hohlprofil 55 bzw. 56 versehen. In der geschlossenen Stellung der Türblätter 50, 52 ist zu erkennen, dass sich die Dichtlippen der beiden Hohlprofile 55, 56 überlappen. Dadurch kann ein Spalt zwischen den Türblättern 50, 52 überbrückt und abgedichtet werden. Das Türblatt 50 wird mittels eines nicht dargestellten Antriebs um einen Drehpunkt 58 gedreht, das Türblatt 52 um einen Drehpunkt 60. Der Bewegungsablauf der Türblätter 50, 52 ist in der Darstellung der Fig. 2 durch insgesamt zehn Zwischenstellungen im Abstand von jeweils 10° angedeutet. Es ist dabei gut zu erkennen, dass während der Schließbewegung der Türblätter 50, 52 der jeweilige Kontaktbereich 32 der Hohlprofile 55, 56 dem jeweils zugeordneten Türblatt 50, 52 voreilt, da der jeweilige Kontaktbereich eine gedachte Verlängerung der Innenseite des Türblatts 50, 52 überragt. Trifft das Türblatt 50 mit seiner Innenseite auf ein Hindernis, so wird der Kontakt mit dem Hindernis zunächst durch den Kontaktbereich 32 erfolgen. Ein solcher Kontakt mit einem Hindernis kann dann mittels des jeweiligen ersten Schaltprofils 20 in den Hohlprofilen 54, 56 detektiert werden. Wird beispielsweise beim Schließen der beiden Türblätter 50, 52 ein Gegenstand oder eine menschliche Hand zwischen den Türblättern 50, 52 und somit zwischen den jeweiligen Dichtlippen eingeklemmt, so kann eine solche Kollision mittels der jeweiligen zweiten Schaltprofile 46 detektiert werden.

Das erfindungsgemäße Hohlprofil ist insbesondere für eine sogenannte Unterarmerkennung geeignet, wobei eine solche Unterarmerkennung einen typischen Kollisionsfall bei Innenschwenktüren darstellt. Speziell ist anhand der Fig. 2 zu erkennen, dass in einem Winkelbereich zwischen 0° und 10°, also zwischen der vollständig geöffneten Stellung und der ersten Zwischenstellung in Fig. 2, eine Kollisionserkennung, beispielsweise mit dem Unterarm eines Passagiers, mittels des Kontaktbereichs 32 erfolgen wird, der dem jeweils zugeordneten Türblatt 50, 52 voreilt. In diesem Winkelbereich zwischen 0°und 10°war mit konventionellen Hohlprofilen keine Kollisionserkennung möglich. Der Winkelbereich zwischen 0° und 10° stellt dadurch einen ersten Bereich dar, in dem der Kontaktbereich 32 und das Schaltprofil 20 für eine Kollisionserkennung sorgen.

Ein zweiter Winkelbereich liegt zwischen etwa 10° und 70°, also zwischen der in Fig. 2 dargestellten zweiten Position, die unmittelbar auf die vollständig geöffnete Position folgt und der in Fig. 2 dargestellten achten Position. In diesem Winkelbereich kann eine Kollision sowohl mittels des Kontaktbereichs 32 und dem Schaltprofil 20 als auch mittels der Dichtlippe 38 und dem Schaltprofil 46 detektiert werden. Es ist anhand der Fig. 2 zu erkennen, dass der Kontaktbereich dem Türblatt immer noch voreilt, dass aber beispielsweise eine Person, die von dem Türblatt 50 getroffen wird, mit einiger Sicherheit auch die Dichtlippe 38 auslenken wird.

In einem dritten Winkelbereich zwischen 70° und 90°, also zwischen der in Fig. 2 dargestellten achten Position und der vollständig geschlossenen Position, wird eine Kollision vorrangig über die Dichtlippe und das Schaltprofil 46 detektiert. Denn in diesem Winkelbereich treten Kollisionen vorrangig dann auf, wenn Personen oder Körperteile von Personen zwischen den beiden Türblättern 50, 52 eingeklemmt werden. Solche Kollisionen führen dann zu einer Auslenkung der Dichtlippe 38 und somit zu einem detektierbaren Schaltsignal.

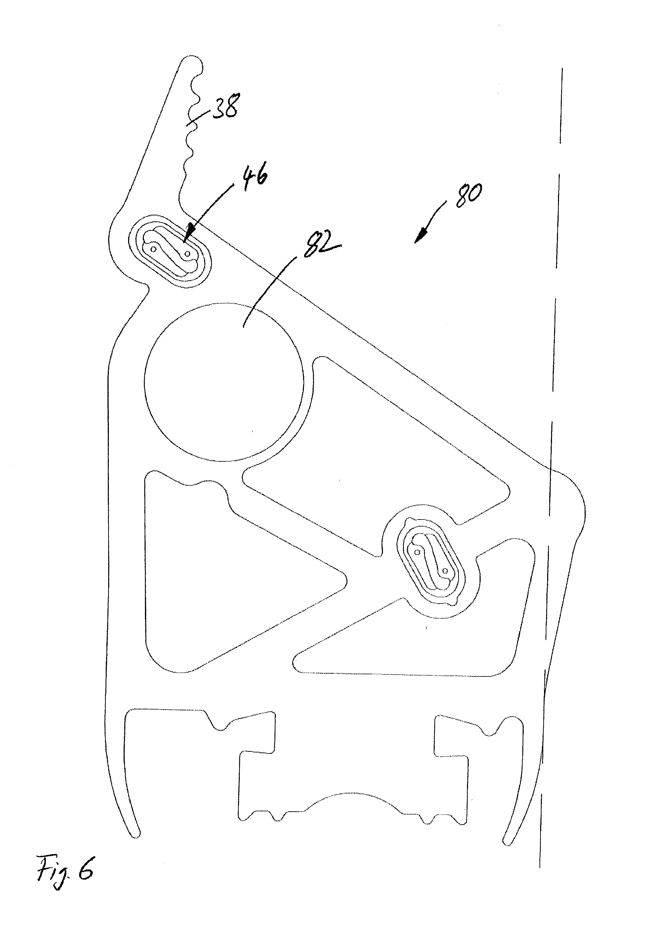

Mit dem erfindungsgemäßen Hohlprofil und speziell durch Vorsehen des voreilenden Kontaktbereichs 32 kann dadurch der gesamte Öffnungsbereich der Türblätter 50, 52 zwischen 0° und 90° bezüglich möglicher Kollisionen abgedeckt werden. Das erfindungsgemäß Hohlprofil zeichnet sich somit dadurch aus, dass die Schaltleisten 20, 46, der Kontaktbereich 32 sowie die Dichtlippe 38 so angeordnet und ausgebildet sind, dass Kollisionen in diesem gesamten Öffnungsbereich zwischen 0° und 90° detektiert werden können. Alternativ zur Anordnung der Schaltprofile 20, 46 können in dem erfindungsgemäßen Hohlprofil die Hohlkammern auch abgedichtet und mit einem Drucksensor verbunden sind. Dabei können dieselben Hohlkammern verwendet werden, die auch für das Einziehen der Schaftprofile vorgesehen sind. Zusätzlich oder alternativ können auch weitere Hohlkammern, insbesondere kreisrunde Hohlkammern, vorgesehen werden, die bei einer Kollision zur Erzeugung eines Druckstoßes oder einer Druckschwankung führen, wobei dieser Druckstoß oder diese Druckschwankung dann wiederum mit einem geeigneten Sensor, beispielsweise einem Membransensor, detektiert werden kann, siehe die nachstehend beschriebenen Fig. 6, 7 und 9.

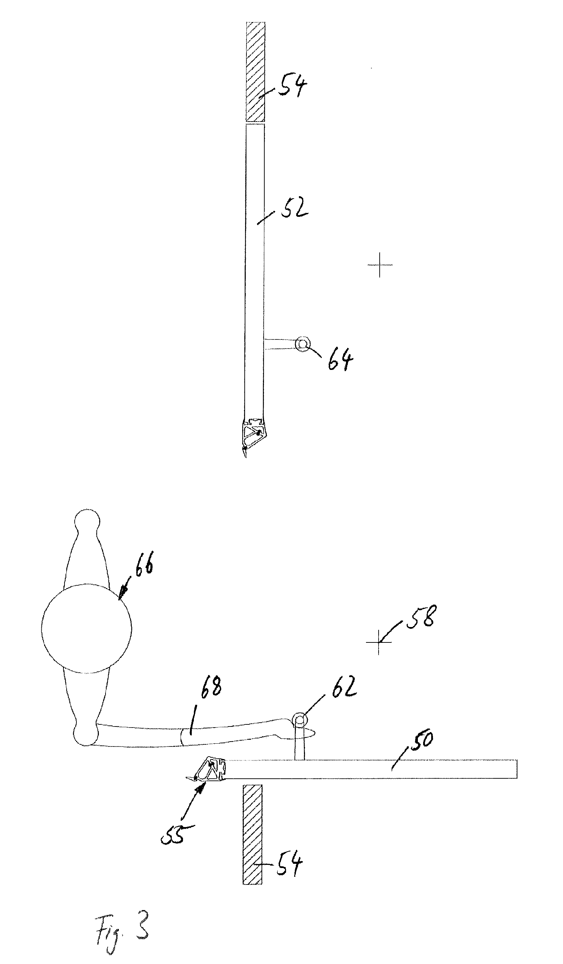

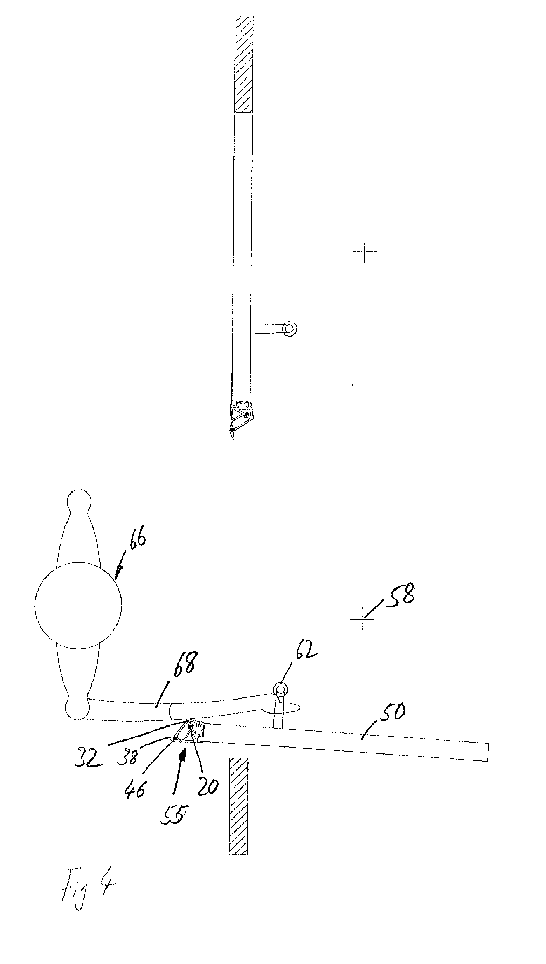

Wie Fig. 3 zu entnehmen ist, ist jedes der Türblätter 50, 52 mit einem Handgriff 62 bzw. 64 versehen. Diese Handgriffe werden bei geöffneten Türblättern 50, 52 typischerweise von Fahrgästen 66 benutzt, um sich mit einer Hand daran festzuhalten. Insbesondere ältere oder gebrechliche Fahrgäste machen von dieser Möglichkeit Gebrauch, um die üblicherweise vorhandenen Stufen zwischen einer Fahrbahn oder einem Gehsteig und dem Innenraum des Fahrzeugs zu überwinden. Bereits anhand der Darstellung der Fig. 3 ist zu erkennen, dass dann, wenn das Türblatt in der in Fig. 3 dargestellten Position seinen Schließvorgang beginnt und infolgedessen beginnt, sich um den Drehpunkt 58 zu drehen, eine Kollision des Hohlprofils 55 an der Stirnseite des Türblatts 50 mit einem Unterarm 68 des Passagiers 66 erfolgen wird. Diese Situation ist in Fig. 4 dargestellt. Das Türblatt 50 hat sich ein Stück weit um den Drehpunkt 58 gedreht, während der Fahrgast 66 sich unverändert an dem Türgriff 62 an dem Türblatt 50 festhält. Das Hohlprofil 55 berührt nun mit seiner in Fig. 4 obenliegenden Kante den Unterarm 68 des Fahrgasts 66. Fig. 4 ist zu entnehmen, dass eine Berührung des Hohlprofils 55 mit dem Unterarm 68 durch den Kontaktbereich 32 erfolgt, der eine voreilende Auswölbung oder einen voreilenden Vorsprung gegenüber dem Türblatt 50 bildet. Unmittelbar nach Kontakt des Kontaktbereichs 32 mit dem Unterarm 68 wird, wie bereits erläutert wurde, die erste Hohlkammer 18 komprimiert werden und mittels des ersten Schaltprofils 20 kann dann unmittelbar ein Schaltsignal ausgelöst werden, das die Bewegung des Türblatts 50 stoppt oder reversiert.

Es ist Fig. 4 weiter zu entnehmen, dass alleine mit dem zweiten Schaltprofil 46 ein solches Abstoppen oder Reversieren der Bewegung des Türblatts 50 nicht zu erzielen wäre, denn die Dichtlippe kommt in der in Fig. 4 dargestellten Situation überhaupt nicht in Kontakt mit dem Unterarm 68 des Fahrgasts 66. Das erfindungsgemäße Hohlprofil 55 ermöglicht es somit, die Schließbewegung der Türblätter 50, 52 zuverlässig abzusichern.

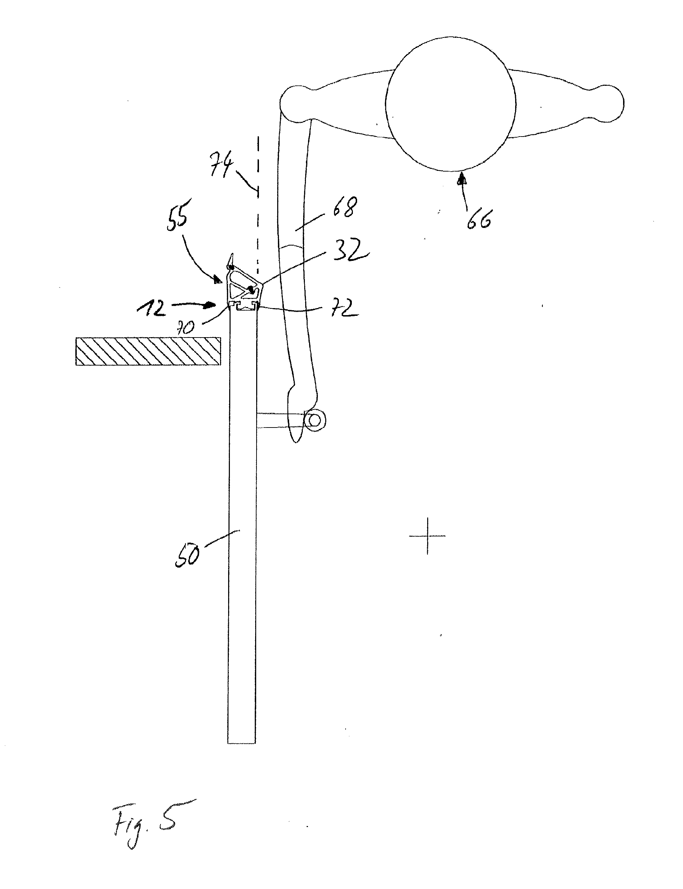

Die Darstellung der Fig. 5 zeigt abschnittsweise und in vergrößerter Darstellung die Situation der Fig. 3. Es ist zu erkennen, dass das Hohlprofil 55 mit seinem Halteabschnitt 12 in einer hinterschnittenen Nut an der Stirnseite des Türblatts 50 befestigt ist. Die Außenflächen des Hohlprofils 55 werden, siehe auch Fig. 1, im Bereich des Halteabschnitts 12 mittels zweier außenliegender Dichtlippen 70, 72 gebildet. Die Dichtlippen 70, 72 liegen mit ihren Innenflächen an der Innenseite bzw. Außenseite des Türblatts 50 an. Wie Fig. 5 zu entnehmen ist, überragt der Kontaktbereich 32 des Hohlprofils 55 eine gedachte Verlängerung 74 der Innenseite des Türblatts 50, in der Fig. 5 nach rechts. Dadurch ist sichergestellt, dass der Kontaktbereich 32 vor der Innenseite des Türblatts 50 mit dem Unterarm 68 des Fahrgasts 66 kollidiert.

In der Darstellung der Fig. 1 ist das Türblatt 50 nicht eingezeichnet. Die gestrichelte Linie 76 verdeutlicht aber eine gedachte Verlängerung der Außenfläche des Hohlprofils 10 im Bereich der Anbindung der Dichtlippe 72 an den Halteabschnitt 12. Es ist Fig. 1 zu entnehmen, dass der Kontaktbereich 32 die gedachte Verlängerung 76 der Außenfläche des Hohlprofils 10 im Bereich des Halteabschnitts 12 überragt. Um dies zu erreichen, läuft die Außenfläche des Hohlprofils 10 ausgehend von dem Anbindungsbereich der Dichtlippe 72 im Halteabschnitt 12 schräg vom Halteabschnitt 12 weg, in der Fig. 1 also nach rechts. Der Kontaktbereich 32 selbst ist mittels einer konvexen Auswölbung gebildet, die einen in Längsrichtung des Hohlprofils 10 durchgehenden Vorsprung bildet. Anschließend an den Kontaktbereich 32 läuft die Außenfläche des Hohlprofils 10 wieder schräg zurück und schneidet unmittelbar nach dem Kontaktbereich die gedachte Verlängerung 76 der Außenfläche des Hohlprofils 10 im Halteabschnitt 12. Die Außenfläche des Hohlprofils läuft dann geradlinig und schräg weiter bis zur Dichtlippe 38.

Fig. 6 zeigt eine Ansicht eines erfindungsgemäßen Hohlprofils 80, wobei lediglich die Unterschiede zu dem in Fig. 1 gezeigten und erläuterten Hohlprofil erörtert werden sollen. Das Hohlprofil 80 weist eine kreisrunde Hohlkammer 82 auf, die zum Erzeugen eines detektierbaren Druckstoßes oder einer detektierbaren Druckänderung bei einer Kollision der Dichtlippe 38 mit einem Hindernis vorgesehen ist. Hierzu ist die Hohlkammer 82 abgedichtet und über eine Druckleitung mit einem Sensor verbunden oder ein Sensor befindet sich innerhalb der Hohlkammer 82. Üblicherweise ist die Hohlkammer 82 mit einem Druckschlauch verbunden, der zu einem Membransensor geführt ist. Wird nun die Hohlkammer 82 bei einer Kollision der Dichtlippe 38 mit einem Hindernis komprimiert, so entsteht eine Druckschwankung oder ein Druckstoß, der durch den Sensor detektiert werden kann. Mittels der Hohlkammer 82 und einem entsprechenden Sensor kann dann zusätzlich oder alternativ zu der elektrischen Schaltleiste 46 eine Kollision der Dichtlippe 38 mit einem Hindernis detektiert werden.

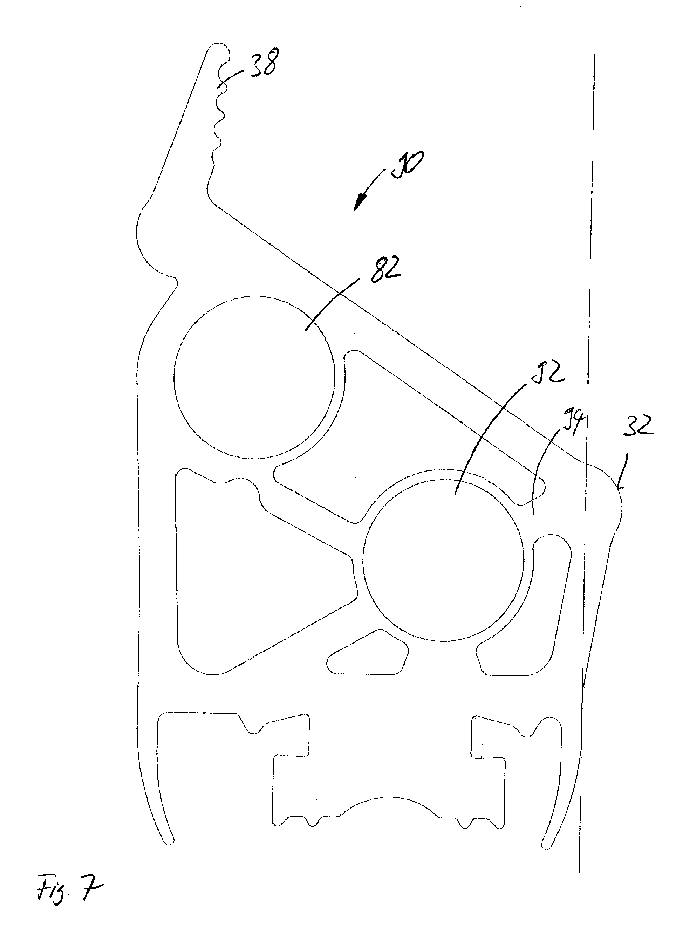

Die Darstellung der Fig. 7 zeigt ein elastisches Hohlprofil 90 gemäß einer weiteren Ausführungsform der Erfindung, wobei erneut lediglich die Unterschiede zu dem in Fig. 1 dargestellten Hohlprofil 10 erläutert werden sollen. Das Hohlprofil 90 weist zwei kreisrunde Hohlkammern 82, 92 auf, die beide zum Erzeugen eines detektierbaren Druckstoßes beim Komprimieren vorgesehen sind. Die Kollision der Dichtlippe 38 mit einem Hindernis wird über einen Druckstoß oder eine Druckschwankung innerhalb der Hohlkammer 82 detektiert, wobei im Unterschied zum Hohlprofil 80 der Fig. 6 im Verbindungsbereich der Dichtlippe 38 mit dem Hauptabschnitt des Profils keine Hohlkammer 44 vorgesehen ist. Vielmehr ist der Verbindungsbereich der Dichtlippe 38 mit dem Hauptabschnitt massiv ausgeführt, so dass ein Verschwenken der Dichtlippe 38 unmittelbar zu einer Komprimierung der Hohlkammer 82 führt.

Die Hohlkammer 92 ist mittels eines ersten Steges 94 mit dem Kontaktbereich 32 verbunden. Eine Bewegung des Kontaktbereichs 32 in der Darstellung der Fig. 7 nach links oder nach links unten wird zu einer Komprimierung der Hohlkammer 92 und dadurch zum Erzeugen eines detektierbaren Druckstoßes oder einer detektierbaren Druckschwankung innerhalb der Hohlkammer führen. Mittels der Hohlkammern 82 bzw. 92 können mit dem Profil 90 dadurch Kollisionen des Hohlprofils 90 sowohl im Bereich der Dichtlippe als auch im Bereich des Kontaktbereichs 32 detektiert werden.

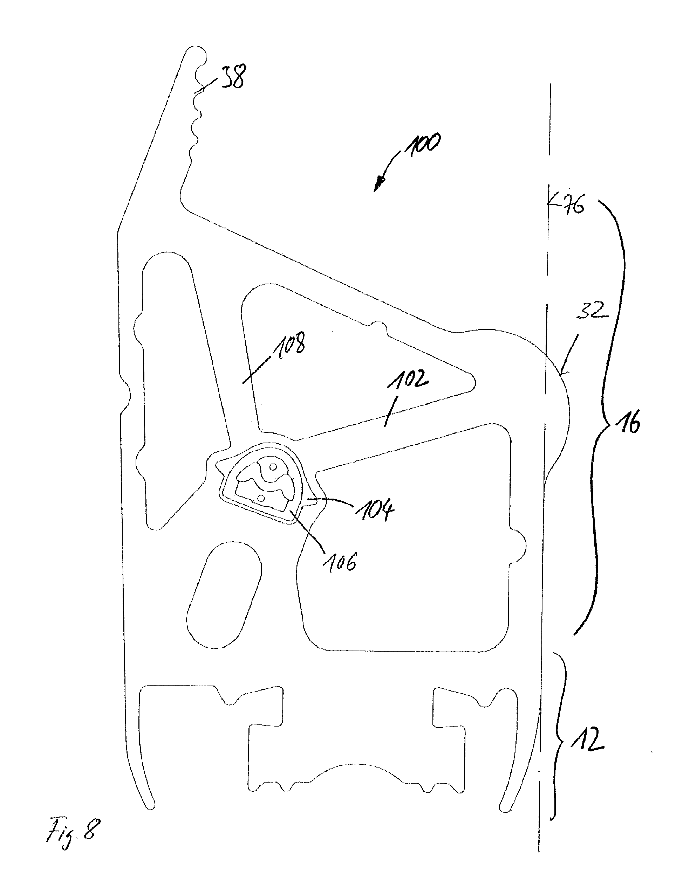

Die Darstellung der Fig. 8 zeigt ein Hohlprofil 100 gemäß einer weiteren Ausführungsform der Erfindung. Das Hohlprofil 100 weist wie das Hohlprofil 10 der Fig. 1 einen gegenüber der gedachten Verlängerung 76 der seitlichen Begrenzung des Halteabschnitts 12 vorragenden Kontaktbereich 32 auf. Der Kontaktbereich 32 ist mittels eines ersten Steges 102 mit einer Hohlkammer 104 verbunden, in der ein elektrisches Schaltprofil 106 angeordnet ist. Der Verbindungsbereich der Dichtlippe 38 mit dem Hauptabschnitt 16 ist mittels eines zweiten Verbindungssteges 108 ebenfalls mit der Hohlkammer 104 verbunden. Das Hohlprofil 100 ermöglicht es dadurch, eine Kollision des Hohlprofils 100 im Kontaktbereich 32 mit dem Schaltprofil 106 zu detektieren und gleichzeitig auch eine Kollision im Bereich der Dichtlippe 38 mittels desselben Schaltprofils 106 zu detektieren.

Anhand der Fig. 8 ist noch zu erkennen, dass der Kontaktbereich 32 die gedachte Verlängerung 76 der Außenseite des Hohlprofils 100 im Halteabschnitt 12 soweit überragt, dass der Betrag dieser Vorwölbung des Kontaktbereichs 32 größer ist als der Verformungsweg, der zum Auslösen des Schaltprofils 106 benötigt wird.

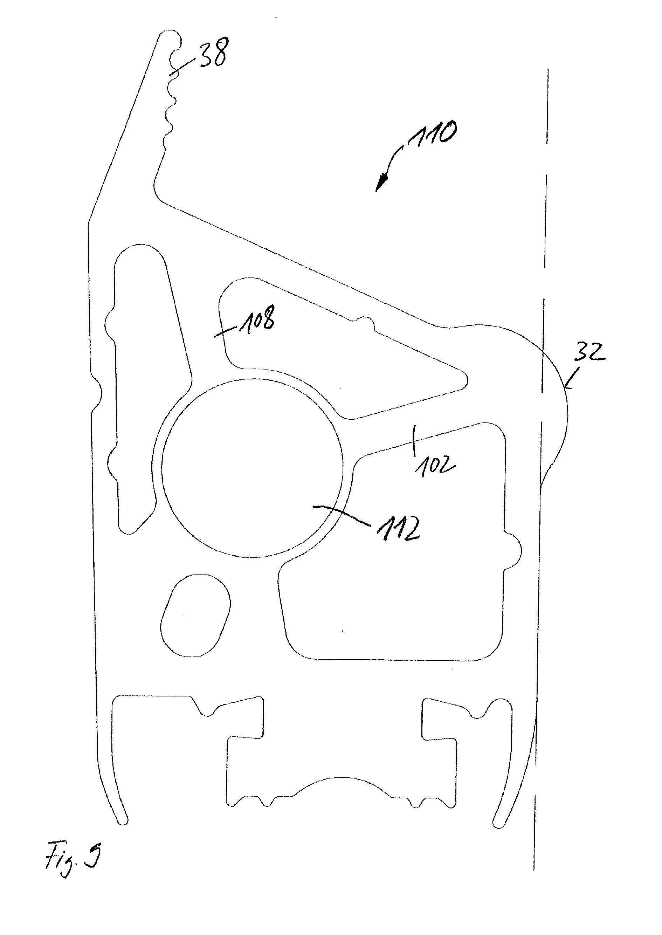

Die Darstellung der Fig. 9 zeigt ein weiteres elastisches Hohlprofil 110 gemäß der Erfindung. Im Unterschied zu dem Hohlprofil 100 der Fig. 8 ist die Hohlkammer 104 durch eine kreisrunde Hohlkammer 112 ersetzt, die zum Erzeugen eines detektierbaren Druckstoßes oder einer detektierbaren Druckschwankung dient. Die Hohlkammer 112 ist mittels des ersten Verbindungssteges 102 mit dem Kontaktbereich 32 verbunden und mittels des zweiten Verbindungssteges 108 mit dem Bereich verbunden, in dem die Dichtlippe 38 an den Hauptabschnitt angebunden ist.

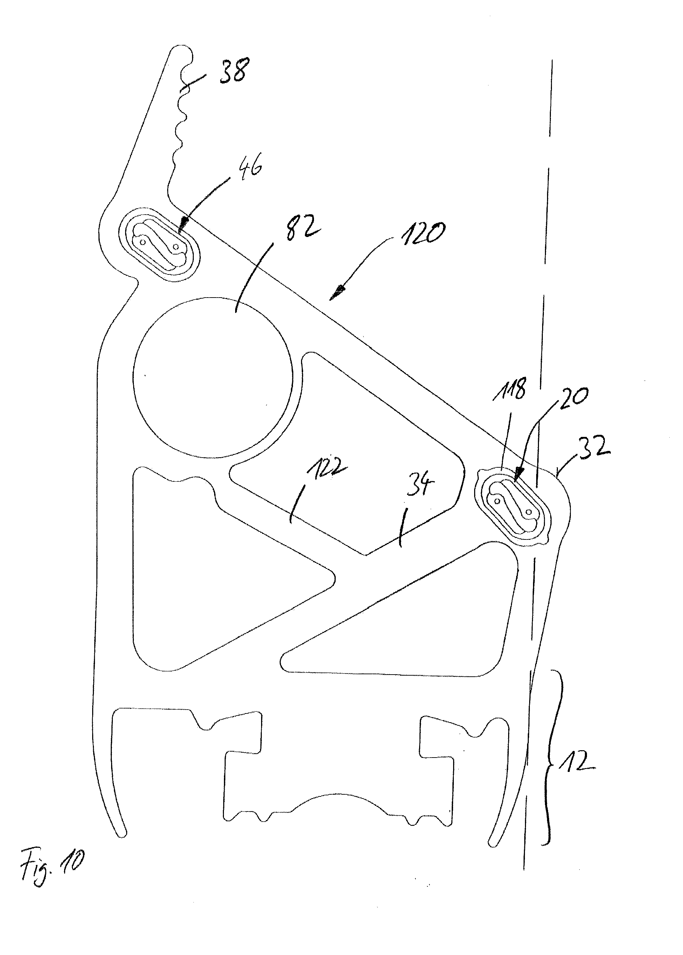

Die Darstellung der Fig. 10 zeigt ein weiteres elastisches Hohlprofil 120 gemäß der Erfindung. Im Folgenden sollen lediglich die Unterschiede zu dem Hohlprofil der Fig. 1 erörtert werden. Das Hohlprofil 120 weist eine kreisrunde Hohlkammer 82 auf, die zum Erzeugen eines detektierbaren Druckstoßes oder einer detektierbaren Druckänderung bei einer Kollision der Dichtlippe 38 mit einem Hindernis vorgesehen ist. Hierzu ist die Hohlkammer 82 in gleicher Weise, wie anhand des Hohlprofils 80 der Fig. 6 beschrieben, abgedichtet und über eine Druckleitung mit einem Sensor verbunden oder der Sensor befindet sich innerhalb der Hohlkammer 82. Mittels der Hohlkammer 82 und einem entsprechenden Sensor kann dann zusätzlich oder alternativ zu der elektrischen Schaltleiste 46 eine Kollision der Dichtlippe 38 mit einem Hindernis detektiert werden.

Im Unterschied zum Hohlprofil 10 der Fig. 1 ist eine Hohlkammer 118, in der das elektrische Schaltprofil 20 angeordnet ist, unmittelbar angrenzend an den vorgewölbten Kontaktbereich 32 angeordnet. Der erste Betätigungssteg 30, wie er anhand der Fig. 1 erläutert wurde, fällt dadurch weg und lediglich der zweite Betätigungssteg 34 erstreckt sich von der Hohlkammer 118 bis zum Halteabschnitt 12. Bei der dargestellten Ausführungsform erstreckt sich der zweite Betätigungssteg 34, der ja der Abstützung der Hohlkammer 118 dient, geradlinig bis zum Halteabschnitt 12. Der zweite Betätigungssteg 34 wird, wie bei dem Hohlprofil 80 der Fig. 6, mit einem dritten Betätigungssteg 122 abgestützt.

Im Vergleich zu dem Hohlprofil 10 der Fig. 1 ist zu erkennen, dass die Hohlkammer 118 im Unterschied zur Hohlkammer 18 in Richtung auf den Kontaktbereich 32 verschoben wurde. Je näher die Hohlkammer 118 an dem Kontaktbereich 32 angeordnet ist, desto kürzer ist der Verformungsweg, der für eine Erzeugung eines Schaltsignals durch das Schaltprofil 20 überwunden werden muss. Dies deshalb, da am Beispiel der Fig. 10 die Hohlkammer 118 unmittelbar angrenzend an den vorgewölbten Kontaktbereich 32 angeordnet ist. Wie in Fig. 10 zu erkennen ist, ist das Hohlprofil zwischen dem Kontaktbereich 32 und der Hohlkammer 118 massiv. Eine Bewegung des Kontaktbereichs 32 durch Kollision mit einem Gegenstand oder einer Person führt also sofort zu einer Bewegung der dem Kontaktbereich 32 zugewandten Wandung der Hohlkammer 118 in Richtung auf das Schaltprofil 20. Nach Überwindung des Hohlraums zwischen dem Schaltprofil 20 und der Innenwand der Hohlkammer 118 wird das Schaltprofil 20 dann sofort zusammengedrückt und ein Schaltsignal wird erzeugt.

Im Unterschied hierzu wird bei dem Schaltprofil 10 der Fig. 1 oder auch dem Schaltprofil 80 der Fig. 6 ein etwas größerer Verformungsweg benötigt, um mit dem Schaltprofil 20 ein Schaltsignal zu erzeugen. Denn eine Bewegung des Kontaktbereichs 32 in Richtung auf die Hohlkammer 18 zu muss zunächst über den ersten Betätigungssteg 30 übertragen werden. Dabei ist nicht auszuschließen, dass sich der erste Betätigungssteg 30 verformt, beispielsweise geringfügig ausknickt. Diese zusätzliche Verformung muss aufgebracht werden, bevor mit dem Schaltprofil 20 ein Schaltsignal ausgelöst werden kann.

Prinzipiell kann gemäß der Erfindung die Hohlkammer 18, 118 für das Schaltprofil 20 auf der gesamten Länge des ersten Betätigungssteges 30 oder des zweiten Betätigungssteges 34 angeordnet werden. Je weiter die Hohlkammer 18, 118 von dem Kontaktbereich 32 entfernt ist, desto größer ist der für die Auslösung eines Schaltsignals erforderliche Verformungsweg. Je weiter die Hohlkammer 18, 118 von dem Kontaktbereich 32 entfernt ist, desto größer ist aber auch der Winkelbereich, innerhalb dem eine durch eine Kollision erzeugte Kraft liegen kann, um noch ein Schaltsignal des Schaltprofils 20 zu erzeugen. Bei dem Hohlprofil 120 der Fig. 10 wäre also der Winkelbereich, in dem eine Kollisionskraft liegen kann und in dem noch sichergestellt ist, dass das Schaltprofil 20 ein Schaltsignal erzeugt, kleiner als ein Winkelbereich bei dem Hohlprofil 10 der Fig. 1 oder dem Hohlprofil 80 der Fig. 6.

Mit anderen Worten ist die Betätigungskraft, die bei einer Kollision erzeugt werden muss, um ein Schaltsignal auszulösen, umso kleiner, je näher die Hohlkammer 18, 118 am Kontaktbereich 32 angeordnet ist. Je näher die Hohlkammer 18, 118 aber am Kontaktbereich 32 angeordnet ist, desto kleiner ist auch der Winkel, innerhalb dem eine Betätigungskraft liegen kann, um noch sicher ein Schaltsignal zu erzeugen. Bei den Hohlprofilen 10, 80 der Fig. 1 und 6 wurde die Hohlkammer 18 daher in einer Position angeordnet, in der eine gewünschte Betätigungskraft und ein gewünschter Winkelbereich für die Betätigungskraft erzielt werden, wie sie für übliche Anwendungen bei Innenschwenktüren besonders geeignet sind. Das Hohlprofil 120 der Fig. 10 wäre dahingegen für eine Spezialanwendung vorzusehen, in der eine sehr geringe Betätigungskraft für das Auslösen eines Schaltsignals erzielt werden soll, ein eingeschränkter Winkelbereich der Betätigungskraft aber unproblematisch ist.

## Patentansprüche

1. Elastisches Hohlprofil, insbesondere für eine stirnseitige Anordnung an einem Türblatt (50, 52) einer Innenschwenktüre, wobei das Hohlprofil (10; 55; 56) einen Halteabschnitt (12) zur Befestigung insbesondere an der Stirnseite des Türblatts (50, 52) aufweist, wobei das Hohlprofil (10; 55; 56) wenigstens eine in Längsrichtung durchgehende Hohlkammer (18, 44; 82; 92; 104; 112; 118) zur Anordnung eines elektrischen Schaltprofils (20; 46; 106) oder zum Erzeugen eines detektierbaren Druckstoßes beim Komprimieren aufweist, wobei das Hohlprofil (10; 55; 56; 80; 90; 100; 110; 120) wenigstens einen Kontaktbereich (32) an einer Außenfläche des Hohlprofils (10; 55; 56) aufweist, **dadurch gekennzeichnet, dass** der Kontaktbereich (32) eine gedachte Verlängerung (76) der seitlichen Begrenzung des Halteabschnitts (12) überragt.

2. Elastisches Hohlprofil nach Anspruch 1, **dadurch gekennzeichnet, dass** der Kontaktbereich (32) die gedachte Verlängerung (76) der seitlichen Begrenzung des Halteabschnitts (12) um einen Abstand überragt, der mindestens einem Verformungsweg des Hohlprofils (10; 55; 56) bei Krafteinwirkung auf den Kontaktbereich (32) bis zum Auslösen des elektrischen Schaltprofils (20) oder bis zum Erzeugen eines detektierbaren Druckstoßes entspricht.

3. Elastisches Hohlprofil nach einem der vorstehenden Ansprüche, **dadurch gekennzeichnet, dass** der Kontaktbereich (32) mittels einer in Längsrichtung durchgehenden Auswölbung der Außenfläche des Hohlprofils (10; 55; 56) gebildet ist.

4. Elastisches Hohlprofil nach einem der vorstehenden Ansprüche, **dadurch gekennzeichnet, dass** das Hohlprofil (10; 55; 56; 90; 100) wenigstens einen ersten Betätigungssteg (30; 94; 102) aufweist, der sich von der Hohlkammer (18; 92; 104; 112) bis zu dem Kontaktbereich (32) erstreckt.

5. Elastisches Hohlprofil nach Anspruch 4, **dadurch gekennzeichnet, dass** sich der erste Betätigungssteg (30; 94; 102) in gerader Linie von der Hohlkammer (18; 92; 104; 112) bis zu dem Kontaktbereich (32) erstreckt.

6. Elastisches Hohlprofil nach einem der vorstehenden Ansprüche, **dadurch gekennzeichnet, dass** die Hohlkammer (18) mit einem zweiten Betätigungssteg (34) verbunden ist.

7. Elastisches Hohlprofil nach Anspruch 6, **dadurch gekennzeichnet, dass** der zweite Betätigungssteg (34) sich ausgehend von der Hohlkammer (18) bis zu dem Halteabschnitt (12) des Hohlprofils (10; 55; 56) erstreckt.

8. Elastisches Hohlprofil nach Anspruch 6 oder 7, **dadurch gekennzeichnet, dass** ein dritter Betätigungssteg (36) im Bereich der Verbindung des zweiten Betätigungsstegs (34) mit der Hohlkammer (18) an dem zweiten Betätigungssteg (34) oder einer Berandung (19) der Hohlkammer (18) angreift und sich in einem Winkel zum zweiten Betätigungssteg (34) erstreckt.

9. Elastisches Hohlprofil nach Anspruch 8, **dadurch gekennzeichnet, dass** sich der dritte Betätigungssteg (36) bis zu einer, dem Kontaktbereich (32) gegenüberliegenden Außenfläche des Hohlprofils (10; 55; 56) erstreckt.

10. Elastisches Hohlprofil nach wenigstens einem der vorstehenden Ansprüche, **dadurch gekennzeichnet, dass** das Hohlprofil (10; 55; 56) an seinem, dem Halteabschnitt (12) gegenüberliegenden Ende mit einer Dichtlippe (38) versehen ist, wobei im Bereich einer Verbindung der Dichtlippe (38) mit dem Hauptabschnitt (12) des Hohlprofils (10; 55; 56) eine zweite Hohlkammer (44, 82) zur Anordnung eines zweiten elektrischen Schaltprofils (46) oder zum Erzeugen eines detektierbaren Druckstoßes beim Komprimieren vorgesehen ist.

11. Innenschwenktüre mit einem elastischen Hohlprofil nach wenigstens einem der vorstehenden Ansprüche, **dadurch gekennzeichnet, dass** der Kontaktbereich (32) eine gedachte Verlängerung (74) einer Innenseite des Türblatts (50, 52) der Innenschwenktüre nach innen überragt.

12. Innenschwenktüre nach Anspruch 11, **dadurch gekennzeichnet, dass** eine innen liegende Außenfläche des Hohlprofils (10; 55; 56) auf Höhe des Halteabschnitts (12) etwa in Verlängerung (74) der Innenseite des Türblatts (50, 52) angeordnet ist, wobei sich die innen liegende Außenfläche ausgehend vom Halteabschnitt (12) schräg von der Innenseite des Türblatts (50, 52)s in Richtung von der gedachten Verlängerung (74) des Türblatt (50, 52) weg bis zum Kontaktbereich (32) erstreckt und wobei sich die Außenfläche anschließend an den Kontaktbereich (32) wieder in Richtung der gedachten Verlängerung (74) erstreckt und diese schneidet.
